# EUROPÄISCHE PATENTANMELDUNG

(11) **EP 4 345 992 A2**
(43) Veröffentlichungstag der Anmeldung: **03.04.2024**
(21) Anmeldenummer: 23195495.9
(22) Anmeldetag: 05.09.2023
(51) Int. Cl.: H01M 50/121, H01M 50/124

(54) **VERFAHREN ZUR UMMANTELUNG EINER BATTERIEZELLE**

(30) Priorität: 28.09.2022 DE 102022124905
(71) Anmelder: TESA SE, 22848 Norderstedt (DE)
(72) Erfinder: SCHUH, Christian, 22848 Norderstedt (DE); HEIDSIECK, Sven, 22848 Norderstedt (DE); GUI, Alicia Lei, 22848 Norderstedt (DE)
(74) Vertreter: tesa SE

(57) **Zusammenfassung**

Verfahren zur Ummantelung einer Batteriezelle, die Schritte umfassend: (i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst; (ii) Bereitstellen einer Klebefolie, wobei die Klebefolie mindestens eine vernetzbare Klebeschicht und mindestens einen Träger umfasst; (iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle; (iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂; (v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄; (vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle; wobei das Verfahren weiterhin mindestens einen Schritt des mindestens teilweisen Vernetzens der vernetzbaren Klebeschicht umfasst, wobei der mindestens eine Schritt des Vernetzens nach den Schritten gemäß (ii) bis (vi) durchgeführt werden kann.

## Beschreibung

Die vorliegende Erfindung betrifft ein Verfahren zur Ummantelung einer Batteriezelle. Weiterhin betrifft die vorliegende Erfindung ein gemäß diesem Verfahren erhaltene oder erhältliche ummantelte Batteriezelle.

Für Hybridfahrzeuge und reine Elektrofahrzeuge sind die Stabilität und Sicherheit der Fahrzeugbatterien von entscheidender Bedeutung. Die Zuverlässigkeit des isolierenden Teils der Ummantelung der Batteriezelle ist die ein wichtiger Faktor, der die Stabilität und Sicherheit der Batteriezelle beeinflusst.

Bekanntlich ist die Betriebsumgebung eines Automobils mit hoher Temperatur, hoher Feuchtigkeit, starken Vibrationen, starken Stößen usw. anspruchsvoll. In solch einer rauen Umgebung ist die Stabilität und Zuverlässigkeit des isolierenden Teils der Batteriezelle von einer großen Bedeutung, um Bruch- und Verbindungsfehler zu vermeiden, die einen Batteriekurzschluss hervorrufen können.

Für die Fahrzeugbatteriezelle besteht ein derzeit verwendetes Isolierverfahren darin, eine Batteriezelle mit einem Haftklebeband zur Isolierung zu umwickeln. Im Allgemeinen ist die Haftfestigkeit eines Haftklebebands geringer als 1 MPa, und daher ist die Zuverlässigkeit des Haftklebebands ungenügend, wenn diese isolierende Haftklebeschicht teil eines über stärkere Klebstoffe hergestellten Verbundes ist.

Es ist daher wünschenswert Verfahren zur Ummantelung einer Batteriezelle bereitzustellen, die die beschriebenen Nachteile vorgenannter Verfahren vermeiden oder weitestgehend vermeiden. Insbesondere sollen die Verfahren der vorliegenden Erfindung die Stabilität und Zuverlässigkeit der Verklebung der Klebefolie mit der die Batteriezelle ummantelt ist, erhöhen. Darüber hinaus ermöglichen die Verfahren der vorliegenden Erfindung den zuverlässigen Aufbau von Batterieverbünden. Das heißt, dass mehrere mit der isolierenden Klebefolie isolierte Batteriezellen durch die Verfahren der vorliegenden Erfindung strukturell mit einer Verklebungsfestigkeit größer als 5 MPa verbunden werden können.

Diese Aufgabe wird adressiert durch ein Verfahren zur Ummantelung einer Batteriezelle sowie eine Batteriezelle erhalten oder erhältlich durch das besagte Verfahren, mit den Merkmalen der unabhängigen Patentansprüche. Vorteilhafte Weiterbildungen, welche einzeln oder in Kombination realisierbar sind, sind in der Beschreibung und den abhängigen Ansprüchen dargestellt.

Daher betrifft die vorliegende Erfindung ein Verfahren zur Ummantelung eine Batteriezelle. Das Verfahren umfasst die nachfolgend näher genannten Schritte. Diese Schritte können in der genannten Reihenfolge durchgeführt werden. Insbesondere die Schritte (i) bis (iv) werden in dieser (temporären) Reihenfolge durchgeführt. In einer Variante des erfindungsgemäßen Verfahrens ist die Reihenfolge der Teilschritte (v) und (vi) getauscht. Das heißt, bevorzugt wird das Verfahren so durchgeführt, dass zunächst die Schritte (i) bis (iv) erfolgen, an die sich die Schritte (v) und (vi) oder umgekehrt die Schritte (vi) und (v) anschließen. Das erfindungsgemäße Verfahren beginnt also mit Schritt (i), dann kommt Schritt (ii), dann Schritt (iii), dann Schrift (iv). Im Anschluss kann Schritt (v) und dann Schritt (vi) erfolgen oder gemäß einer Alternative erst Schritt (vi) und dann Schritt (v).

Der mindestens eine Schritt des Vernetzens kann nach den Schritten gemäß (ii) bis (vi) durchgeführt werden. Weiterhin können einer oder mehrere der genannten Verfahrensschritte einfach oder auch wiederholt durchgeführt werden. Das Verfahren kann über die genannten Schritte hinaus weitere Verfahrensschritte umfassen.

Daher betrifft die vorliegende Erfindung ein Verfahren zur Ummantelung eine Batteriezelle, umfassend
(i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst;
(ii) Bereitstellen einer Klebefolie, wobei die Klebefolie mindestens eine vernetzbare Klebeschicht und mindestens einen Träger umfasst;
(iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle;
(iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂;
(v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄;
(vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle;
wobei das Verfahren weiterhin mindestens einen Schritt des mindestens teilweisen Vernetzens der vernetzbaren Klebeschicht umfasst, wobei der mindestens eine Schritt des Vernetzens nach den Schritten gemäß (ii) bis (vi) durchgeführt werden kann.

Bevorzugt wird der mindestens eine Schritt des Vernetzens nach dem Schritt gemäß (ii) oder nach dem Schritt gemäß (vi) durchgeführt.

Bevorzugt umfasst der Träger einen isolierenden Träger, bevorzugt einen elektrisch isolierenden Träger, weiter bevorzugt einen elektrisch isolierenden Träger mit einem spezifischen Durchgangswiderstand von >10¹⁵ Ωcm, bevorzugt >10¹⁶ Ωcm, weiter bevorzugt >10¹⁷ Ωcm, bestimmt gemäß DIN EN 62631-3-1 (VDE 0307-3-1): 2017-01.

Bevorzugt umfasst der Träger ein oder mehrere Materialien, ausgewählt aus der Gruppe bestehend aus Polyimid, Polybenzimidazol, Polyamidimid, Polyetherimid, Polyacetal, Polyphenylensulfid, Polyetheretherketon, Polytetrafluorethylen, Polyamid 6, ultrahochmolekulargewichtiges Polyethylen, Polypropylen, Vinylchloridharz, Polystyrol, Polyethylentherephthalat, Acrylnitril-Butadien-Styrol, Polycarbonat, Polyvinylchlorid, Ethylenvinylacetat und Polyester, weiter bevorzugt aus der Gruppe bestehend aus Polypropylen, Polyethylentherephthalat, Polycarbonat und Polyvinylchlorid, weiter bevorzugt aus der Gruppe bestehend aus Polypropylen und Polyethylentherephthalat.

Hinsichtlich der Dicke des Trägers gibt es grundsätzlich keine besonderen Einschränkungen. Bevorzugt weist der Träger eine Dicke im Bereich von 20 bis 100 µm, weiter bevorzugt im Bereich 30 bis 90 µm, weiter bevorzugt im Bereich von 40 bis 75 µm auf.

Hinsichtlich der Dicke der vernetzbaren Klebeschicht gibt es grundsätzlich keine besonderen Einschränkungen. Bevorzugt weist die vernetzbare Klebeschicht eine Dicke im Bereich von 10 bis 150 µm, weiter bevorzugt im Bereich von 10 bis 100 µm, weiter bevorzugt im Bereich von 20 bis 60 µm auf.

Bevorzugt umfasst die vernetzbare Klebeschicht eine vernetzbare Haftklebemasse. Bevorzugt weist die vernetzbare Haftklebemasse eine Klebekraft auf Stahl von mindestens 1 N/cm im unvernetzten Zustand, bestimmt gemäß Prüfmethode 2.

Bevorzugt ist die vernetzbare Haftklebemasse durch Strahlung einer Wellenlänge im Bereich von 10 bis 800 nm, weiter bevorzugt durch Strahlung einer Wellenlänge im Bereich von 200 bis 500 nm, weiter bevorzugt durch Strahlung einer Wellenlänge im Bereich von 350 nm und 485 nm, weiter bevorzugt durch Strahlung einer LED Lichtquelle mit einem Emmissionsmaximum im Bereich von 350 nm bis 485 nm vernetzbar.

Bevorzugt umfasst die vernetzbare Haftklebemasse mindestens ein Polymer, mindestens ein Epoxidharz und mindestens einen Photoinitiator.

Bevorzugt umfasst die vernetzbare Haftklebemasse
(a) 25 bis 75 Gew.-%, bevorzugt 30 bis 70 Gew.-% mindestens eines Polymers;
(b) 20 bis 70 Gew.-%, bevorzugt 30 bis 65 Gew.-% mindestens eines Epoxidharzes;
(c) 0,01 bis 5 Gew.-%, bevorzugt 1 bis 4 Gew.-% mindestens eines kationischen Photoinitiators.

Bevorzugt umfasst das mindestens eine Polymer ein oder mehrere Materialien, ausgewählt aus der Gruppe bestehend aus Polyacrylat, Polyurethan, Poly(ethylen)vinylacetat Copolymer, Poly(ethylen)vinylacetat Copolymer, Nitrilkautschuk und Polyacrylat Blockcopolymere, weiter bevorzugt ausgewählt aus der Gruppe bestehend aus Polyacrylat, Poly(ethylen)vinylacetet Copolymer und Polyacrylat Blockcopolymere.

Als Polymere werden auch solche verstanden, die mit funktionellen Gruppen, wie z.B. Anhydrid, Säure, Epoxid, Hydroxy, Siloxan, Oxazolin funktionalisiert wurden.

Bevorzugt umfasst das mindestens ein Epoxidharz mindestens ein Epoxidharz E₁ und mindestens ein Epoxidharz E₂.

Bevorzugt umfasst das Epoxidharz E₁ ein bei 25 °C festes oder hochviskoses Epoxidharz E₁ und das Epoxidharz E₂ ein bei 25 °C flüssiges Epoxidharz E₂.

In Übereinstimmung mit dem fachmännischen Verständnis sind Epoxidharze solche Verbindungen, die zumindest eine Oxiran-Gruppe tragen. Sie können aromatischer oder aliphatischer, insbesondere cycloaliphatischer Natur sein. Epoxidharze können sowohl monomere als auch oligomere beziehungsweise polymere Epoxidharze umfassen. Polymere Epoxidharze weisen häufig im Durchschnitt wenigstens zwei Epoxidgruppen pro Molekül, vorzugsweise mehr als zwei Epoxidgruppen pro Molekül, auf.

Bevorzugt ist das mindestens ein Epoxidharz E₁ und/oder mindestens ein Epoxidharz E₂, bevorzugt das mindestens ein Epoxidharz E₁ und mindestens ein Epoxidharz E₂, ausgewählt aus der Gruppe bestehend aus Epoxidverbindungen mit zwei oder mehr Epoxidgruppen, bevorzugt zwei Epoxidgruppen.

Die oligomeren beziehungsweise polymeren Epoxidharze umfassen zumeist lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht solcher Epoxidharze kann von 58 bis etwa 100.000 g/mol oder mehr variieren, wobei das Molekulargewicht eine wichtige Stellgröße für die Einstellung der dynamischen Viskosität ist. Beispielhafte polymerisierbare Epoxidharze umfassen Epoxycyclo-hexancarboxylate, wie beispielsweise 4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylmethyl)adipat. Weitere Beispiele für polymerisierbare Epoxidharze sind beispielsweise in der US 3,117,099 A offenbart. Weitere polymerisierbare Epoxidverbindungen, die bei der Anwendung dieser Erfindung besonders nützlich sind, umfassen Glycidylethermonomere, wie sie beispielsweise in der US 3,018,262 offenbart sind. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Insbesondere Diglycidylether von Bisphenolen, wie z.B. Bisphenol-A (4,4'-(Propan-2,2-diyl)diphenol) und Bisphenol-F (Bis(4-hydroxyphenyl)methan). Solche Reaktionsprodukte sind kommerziell in unterschiedlichen Molekulargewichten und Aggregatzuständen erhältlich (beispielsweise sogenannte Typ 1 bis Typ 10 BADGE-Harze). Typische Beispiele für flüssige Bisphenol-A-Diglycidylether sind Epikote 828, D.E.R.331 und Epon 828. Typische feste BADGE-Harze sind Araldite GT6071, GT7072, Epon 1001 und D.E.R. 662. Weitere Umsetzungsprodukte von Phenolen mit Epichlorhydrin sind die Phenol- und Cresolnovolakharze wie z.B. die Epiclon Typen oder Araldite EPN und ECN Typen (z.B. ECN1273).

Bevorzugt ist das mindestens eine Epoxidharz E₁ und/oder das mindestens eine Epoxidharz E₂, bevorzugt das mindestens eine Epoxidharz E₁ und das mindestens eine Epoxidharz E₂, ausgewählt aus der Gruppe bestehend aus Epoxidverbindungen mit zumindest einer cycloaliphatischen Gruppe, bevorzugt einer Cyclohexylgruppe oder Dicyclopentadienylgruppe. Weiter bevorzugt ist zusätzlich oder alternativ das mindestens eine Epoxidharz E₁ und/oder das mindestens eine Epoxidharz E₂, bevorzugt das mindestens eine Epoxidharz E₁ und das mindestens eine Epoxid E₂, ausgewählt ist aus der Gruppe bestehend aus Bisphenol-A-Diglycidylethern und Bisphenol-F-Diglycidylethern, bevorzugt Bisphenol-A-Diglycidylethern.

Bevorzugt weist das mindestens ein Epoxidharz E₁ ein Tg von ≥ 25 °C und das mindestens ein Epoxidharz E₂ ein Tg von < 25 °C, bestimmt gemäß Prüfmethode 3, auf.

Bevorzugt weist das mindestens ein Epoxidharz E₁ bei 25 °C eine dynamische Viskosität von 100 Pa s oder mehr, weiter bevorzugt von 150 Pa s oder mehr, bestimmt gemäß Prüfmethode 4, auf.

Bevorzugt weist das mindestens ein Epoxidharz E₂ bei 25 °C eine dynamische Viskosität von 30 Pa s oder weniger, weiter bevorzugt 20 Pa s oder weniger, weiter bevorzugt 10 Pa s oder weniger, bestimmt gemäß Prüfmethode 4, auf.

Bevorzugt ist das Epoxidharz E₁ ausgewählt aus der Gruppe bestehend aus Verbindungen, die bei 25 °C Feststoffe oder hochviskose Stoffe sind, wobei letztere im Rahmen der vorliegenden Erfindung über eine Untergrenze der dynamischen Viskosität bei 25 °C definiert werden. Der Fachmann versteht insoweit, dass die Unterscheidung zwischen Feststoffen und entsprechenden hochviskosen Stoffen für die Anwendung in der Praxis zweckmäßig ist, da die Viskosität von Feststoffen intrinsisch mehrere Zehnerpotenzen über dem vorstehend angegebenen Wert der dynamischen Viskosität liegt, praktisch aber häufig kaum sinnvoll zu bestimmen ist, so dass es ausreichend ist festzustellen, dass es sich um einen Feststoff handelt. Durch die gewählte Definition besteht vorteilhafterweise auch keine Notwendigkeit zu unterscheiden, ob ein Stoff bei 25 °C nunmehr ein Feststoff oder ein hochviskoser Stoff mit einer entsprechenden dynamischen Viskosität ist. Bei den polymerisierbaren Epoxid E₂ handelt es sich im Gegensatz hierzu um niedrigviskose Flüssigkeiten, die im Rahmen der vorliegenden Erfindung über eine Obergrenze der dynamischen Viskosität bei 25 °C definiert werden. Im Rahmen der vorliegenden Erfindung wird die dynamische Viskosität dabei gemäß der DIN 53019-1 aus 2008; bei 25 °C, mit einer Schergeschwindigkeit von 1 s⁻¹ bestimmt.

Dabei ist es vorteilhaft, wenn die Differenz der Viskositäten zwischen Epoxidharz E₁ und E₂ relativ groß gewählt wird. Bevorzugt ist deshalb mindestens ein Epoxidharz E₁, das bei 25 °C eine dynamische Viskosität von 100 Pa s oder mehr, bevorzugt von 150 Pa s oder mehr, aufweist. Weiter bevorzugt ist mindestens ein Epoxid E₂, das bei 25 °C eine dynamische Viskosität von 30 Pa s oder weniger, bevorzugt 20 Pa s oder weniger, ganz besonders bevorzugt 10 Pa s oder weniger, aufweist. Hierbei werden besonders bevorzugt die entsprechenden bevorzugten Bereiche miteinander kombiniert.

Bevorzugt weist das mindestens ein Epoxidharz E₁ eine Erweichungstemperatur von 45 °C oder mehr, bestimmt gemäß Prüfmethode 5, auf.

Weiter bevorzugt ist es insoweit, wenn die beiden vorstehenden beschriebenen Merkmale der Epoxidharze insoweit kombiniert werden, als dass Epoxidharze mit zumindest einer cycloaliphatischen Gruppe durch Hydrierung von entsprechenden Bisphenolverbindungen erhalten werden. Besonders bevorzugt ist somit das mindestens eine Epoxidharz E₁ und/oder das mindestens eine Epoxidharz E₂, bevorzugt das mindestens eine Epoxid E₁ und das mindestens eine Epoxidharz E₂, ausgewählt ist aus der Gruppe bestehend aus hydrierten Bisphenol-A-Diglycidylethern und hydrierten Bisphenol-F-Diglycidylethern, bevorzugt hydrierten Bisphenol-A-Diglycidylethern. Weiter bevorzugt ist das Epoxidharz E₂ ausgewählt sind aus der Gruppe bestehend aus hydrierten Bisphenol-A-Diglycidylethern und hydrierten Bisphenol-F-Diglycidylethern, bevorzugt hydrierten Bisphenol-A-Diglycidylethern.

Aus den vorstehenden Ausführungen folgt auch, dass der Einsatz von festen Epoxidharz E₁ wegen der resultierenden großen Diskrepanz in der dynamischen Viskosität besonders bevorzugt ist. Weiter bevorzugt ist deshalb mindestens ein Epoxidharz E₁ als ein Feststoff mit einer Erweichungstemperatur von 45 °C oder mehr.

Bevorzugt liegt E₁:E₂ im Bereich von 10:1 bis 1:10, weiter bevorzugt im Bereich von 4:1 bis 1:4.

Bevorzugt umfasst der mindestens ein Photoinitiator ein oder mehrere Materialien, ausgewählt aus der Gruppe bestehend aus Sulfonium, lodonium und Metallocen basierende Systemen.

Für Beispiele für Sulfonium basierende Kationen sei auf die Ausführungen in US6908722B1 verwiesen. Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Zudem sind insbesondere für lodoniumbasierende Initiatoren auch Chlorid, Bromid oder lodid als Anionen denkbar, wobei aber Initiatoren, die im Wesentlichen frei von Chlor und Brom sind, bevorzugt sind. Ein leistungsfähiges Beispiel für ein solches System ist beispielsweise Triphenylsulfoniumhexafluoroantimonat. Weitere geeignete Initiatoren sind beispielsweise in der US 3,729,313 A, US 3,741,769 A, US 4,250,053 A, US 4,394,403 A, US 4,231,951 A, US 4,256,828 A, US 4,058,401 A, US 4,138,255 A und US 2010/063221 A1 offenbart.

Konkrete Beispiele für einsetzbare Sulfonium-Salze sind Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(pentafluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecyl-phenyl)-sulfoniumtetrakis-(3,5-bis-trifluoromethylphenyl)-borat, 4-Acetamidphenyldiphe-nylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenyl-sulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexa-fluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluorobenzyl)-borat, 5-Methyl-10-oxothianthreniumtetrafluoroborat, 5-Methyl-10-oxothianthreni-umtetrakis-(pentafluorobenzyl)-borat und 5-Methyl-10,10-dioxothianthreniumhexafluorophosphat.

Konkrete Beispiele für einsetzbare lodonium-Salze sind Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolylcumyl)-iodoniumtetrakis-(pentafluorophenyl)-borat, und Ferrocenium-Salze (siehe zum Beispiel EP0542716B1), wie η5-(2,4-cyclopentadien-1-yl)-[(1,2,3,4,5,6,9)-(1-methylethyl)-benzol]-eisen.

Photoinitiatoren werden typischerweise einzeln oder als Kombination von zwei oder mehreren Photoinitiatoren eingesetzt. Beim Einsatz von Photoinitiatoren sind Kombinationen mit sogenannten Sensitizern für die Anpassung der Aktivierungswellenlänge des Photoinitiationssystems an das gewählte Emissionsspektrum sehr hilfreich, für die auf dem Fachmann bekannte Literatur, wie z.B. "Industrial Photoinitiators: A technical guide" 2010 von A.W. Green, verwiesen wird.

Bevorzugt umfasst die vernetzbare Haftklebemasse zusätzlich
(d) 3 bis 30 Gew.-%, weiter bevorzugt 5 bis 20 Gew.-%, weiter bevorzugt 7 bis 15 Gew.-%, bezogen auf die Summe der Gew.-% des mindestens eines Polymers und des mindestens eines Epoxidharzes, mindestens ein elastomermodifiziertes Epoxid E₃.

Bevorzugt umfasst das mindestens eine elastomermodifizierte Epoxid E₃ ein oder mehrere Materialien, ausgewählt aus der Gruppe bestehend aus carboxy-terminiertes Nitrilkautschuk, carboxy-terminiertes Butadienkautschuk, epoxy-terminiertes Butadienkautschuk, epoxy-terminiertes Nitrilkautschuk, epoxyfunktionalisierten Polyurethan, Polyester und Polyether.

Als elastomermodifiziertes Epoxid E₃ im Sinne der vorliegenden Erfindung sind - insbesondere flüssige, in der Regel hochviskose - Epoxide mit einer mittleren Funktionalität von mindestens zwei und einem Elastomergehalt von bis zu 50 Gew.-%, vorzugsweise mit einem solchen von 5 bis 40 Gew.-%, zu verstehen. Die Epoxidgruppen können endständig und/oder in der Seitenkette des Moleküls angeordnet sein. Der elastomere Strukturanteil dieser flexibilisierten Epoxide besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz E₃ ist beispielweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze E₃ kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden, wodurch sogenannte carboxy-terminierte-Nitrilkautschuke (CTBN) erhalten werden. In der Regel enthalten diese Verbindungen nicht nur an den Enden, sondern auch entlang der Hauptkette Säuregruppen. CTBN werden beispielweise unter dem Handelsnamen Hycar von der Firma B. F. Goodrich angeboten werden. Diese haben Molmassen zwischen 2000 und 5000 und Acrylnitrilgehalte zwischen 10 % und 30 %. Konkrete Beispiele sind Hycar CTBN 1300 x 8, 1300 x 13 oder 1300 x 15. Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) - wie beispielsweise Hypro 1300X40 ETBN, Hypro 1300X63 ETBN und Hypro 1300X68 ETBN - erhältlich. Ein Beispiel für einen epoxy-terminierten Butadienkautschuk ist Hypro 2000X174 ETB.

Weitere Beispiele für elastomermodifizierte epoxy-terminierte Epoxide E₃ sind ein Re-aktionsprodukt eines Diglycidylethers von Neopentylalkohol und eines Butadien/Acrylnitril-Elastomers mit Carboxylenden (z. B. EPONTM Resin 58034 von Resolution Performance Pro-ducts LLC), ein Reaktionsprodukt eines Diglycidylethers von Bisphenol-A und eines Butadi-en/Acrylnitril-Elastomers mit Carboxylenden (z. B. EPONTM Resin 58006 von Resolution Per-formance Products LLC), ein Butadien/Acrylnitril-Elastomer mit Carboxylenden (z. B. CTBN-1300X8 und CTBN-1300X13 von Noveon, Inc., Cleveland, Ohio) und ein Butadien/Acrylnitril-Elastomer mit Aminenden (z. B. ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (z. B. EPONTM Resin 58003 von Resolution Performance Products LLC).

Bevorzugt umfassen die mindestens zwei gegenüberliegenden Seitenwände S₁ und S₂ mindestens zwei Flächen F₁ und F₂, wobei die Seitenwand S₁ die Fläche F₁ und die Seitenwand S₂ die Fläche F₂ umfasst. Bevorzugt weist die Fläche F₁ und die Fläche F₂ die gleiche Größe auf.

Bevorzugt umfassen die mindestens zwei gegenüberliegenden Seitenwände S₃ und S₄ mindestens zwei Flächen F₃ und F₄, wobei die Seitenwand S₃ die Fläche F₃ und die Seitenwand S₄ die Fläche F₄ umfasst.

Bevorzugt weist die Fläche F₃ und die Fläche F₄ die gleiche Größe auf. Bevorzugt sind die Flächen F₁ und F₂ größer als die Flächen F₃ und F₄.

Bevorzugt ist die Batteriezelle rechteckig.

Bevorzugt umfasst die Oberseite O Batteriekontakte. Gemäß einer Variante der Erfindung weisen die Seitenwände S₃ und S₄ jeweils einen Batteriekontakt auf.

Bevorzugt befindet sich die Unterseite U gegenüber der Oberseite O.

Bevorzugt wird das mindestens teilweise Vernetzen der vernetzbaren Klebeschicht nach dem Schritt gemäß (ii) durchgeführt.

Bevorzugt wird das mindestens teilweise Vernetzen der vernetzbaren Klebeschicht nach dem Schritt gemäß (vi) durchgeführt.

Bevorzugt wird gemäß (ii) die Klebefolie in Form einer zu einer Rolle gewickelten Klebefolienbahn bereitgestellt.

Bevorzugt umfasst (iii):
(iii.1) Abwickeln der Klebefolie von der Rolle und gleichzeitiges Vernetzen der vernetzbaren Klebeschicht durch Strahlung einer Wellenlänge im Bereich von 10 bis 800 nm, bevorzugt durch Strahlung einer Wellenlänge im Bereich von 200 bis 500 nm, weiter bevorzugt durch Strahlung einer Wellenlänge im Bereich von 350 nm und 485 nm, weiter bevorzugt durch Strahlung einer LED Lichtquelle mit einem Emmissionsmaximum im Bereich von 350 nm bis 485 nm vernetzbar ist.

Bevorzugt weist die Klebefolie eine Breite b und eine Länge l auf.

Bevorzugt ragt im Schritt (iii) die Breite b der Klebefolie um Fläche Δb₁ über die Unterseite U der Batteriezelle hinaus.

Bevorzugt ragt im Schritt (iv) die Länge l der Klebefolie um Fläche Δl₁ über die Oberseite O der Batteriezelle hinaus.

Bevorzugt ragt im Schritt (iv) die Breite b der Klebefolie um Fläche Δb₂ über den mindestens zwei gegenüberliegenden Seitenwänden S₁ und S₂ der Batteriezelle hinaus, wobei Δb₂ < Δb₁.

Bevorzugt ragt im Schritt (iv) die Breite b der Klebefolie um Fläche Δb₃ über die Unterseite U der Batteriezelle hinaus, wobei Δb₃ < Δb₂ < Δb₁.

Bevorzugt umfasst (iv):
(iv.1) Bereitstellen einer Verklebevorrichtung umfassend mindestens eine Andrückrolle;
(iv.2) Führen der mindestens einer Andrückrolle über die Seitenwand S₁ und/oder die Seitenwand S₂ umfassend Verkleben der Klebeschicht der Klebefolie und der Seitenwand S₁ und/oder der Seitenwand S₂, bevorzugt durch Andrücken der Klebeschicht der Klebefolie mittels der Andrückrolle.

Bevorzugt umfasst (v):
(v.1) Aufbringen von Δb₃ auf die mindestens zwei Seitenwände S₃ und S₄, umfassend Verkleben der Klebeschicht der Klebefolie und der mindestens zwei Seitenwänden S₃ und S₄;
(v.2) Aufbringen von Δb₂ auf die mindestens zwei Seitenwände S₃ und S₄, umfassend Verkleben der Klebeschicht der Klebefolie und der mindestens zwei Seitenwänden S₃ und S₄, unter Bildung von Fläche Δl₂, wobei Δl₂ < Δl₁.

Bevorzugt umfasst (vi):
(vi.1) Aufbringen von Δl₂ auf die Oberseite O der Batteriezelle, umfassend Verkleben der Klebeschicht der Klebefolie und der mindestens einer Oberseite O, unter Bildung von Fläche Δl₃, wobei Δl₃ < Δl₂;
(vi.2) Aufbringen von Δl₃ auf die Oberseite O der Batteriezelle, umfassend Verkleben der Klebeschicht der Klebefolie und der mindestens einer Oberseite O.

Gemäß einer weiteren möglichen Ausführungsform der vorliegenden Erfindung umfasst das Verfahren zur Ummantelung einer Batteriezelle, die Schritte umfassend
(i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst;
(ii) Bereitstellen einer Klebefolie einer Breite b und einer Länge l, wobei die Klebefolie mindestens eine vernetzbare Klebeschicht und mindestens einen Träger umfasst;
(iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle, wobei die Breite b der Klebefolie um Δb₁ über die Unterseite U der Batteriezelle hinausragt;
(iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂, wobei die Breite b der Klebefolie um Fläche Δb₂ über den mindestens zwei gegenüberliegenden Seitenwänden S₁ und S₂ der Batteriezelle hinausragt, wobei Δb₂ < Δb₁;
(v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄, wobei die Breite b der Klebefolie um Fläche Δb₃ über den mindestens zwei gegenüberliegenden Seitenwänden S₃ und S₄ der Batteriezelle hinausragt, wobei Δb₃ < Δb₁;
   (v.1) Aufbringen von Δb₃ auf die mindestens zwei Seitenwände S₃ und S₄, umfassend Verkleben der Klebeschicht der Klebefolie und der mindestens zwei Seitenwänden S₃ und S₄;
   (v.2) Aufbringen von Δb₂ auf die mindestens zwei Seitenwände S₃ und S₄, umfassend Verkleben der Klebeschicht der Klebefolie und der mindestens zwei Seitenwänden S₃ und S₄, unter Bildung von Fläche ΔI₂, wobei Δl₂ < Δl₁;
(vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle;
   (vi.1) Aufbringen von Δl₂ auf die Oberseite O der Batteriezelle, umfassend Verkleben der Klebeschicht der Klebefolie und der mindestens einer Oberseite O, unter Bildung von Fläche ΔI₃, wobei Δl₃ < ΔI₂;
   (vi.2) Aufbringen von Δl₃ auf die Oberseite O der Batteriezelle, umfassend Verkleben der Klebeschicht der Klebefolie und der mindestens einer Oberseite O;
wobei das Verfahren weiterhin mindestens einen Schritt des mindestens teilweisen Vernetzens der vernetzbaren Klebeschicht umfasst, wobei der mindestens eine Schritt des Vernetzens nach dem Schritt gemäß (ii) oder nach dem Schritt gemäß (vi) durchgeführt wird.

Weiter betrifft die vorliegende Erfindung eine ummantelte Batteriezelle, erhältlich oder erhalten durch ein Verfahren wie hierin beschriebenen.

Die vorliegende, wie oben beschriebene Erfindung wird weiterhin durch den folgenden Satz an Ausführungsformen und Kombinationen von Ausführungsformen beschrieben, wobei sich die Kombinationen aus den entsprechenden Abhängigkeiten und Rückbezügen ergeben. Insbesondere sei darauf hingewiesen, dass in denjenigen Stellen, an denen ein Bereich von Ausführungsformen erwähnt ist - wie beispielsweise im Zusammenhang mit einem Ausdruck wie "Verfahren gemäß einer der Ausführungsformen 1 bis 5" -, jede einzelne Ausführungsform in diesem Bereich als für den Fachmann explizit offenbart ist, dieser Ausdruck vom Fachmann also als synonym zu dem Ausdruck "Verfahren gemäß einer der Ausführungsformen 1, 2, 3, 4 und 5" verstanden wird. Weiter sei explizit darauf hingewiesen, dass der folgende Satz an Ausführungsformen nicht den Satz an den Schutzbereich bestimmenden Patentansprüchen, sondern einen geeignet strukturierten Teil der Beschreibung darstellt, der auf allgemeine und bevorzugte Aspekte der vorliegenden Erfindung gerichtet ist.
1. Verfahren zur Ummantelung einer Batteriezelle, die Schritte umfassend
   (i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst;
   (ii) Bereitstellen einer Klebefolie, wobei die Klebefolie mindestens eine vernetzbare Klebeschicht und mindestens einen Träger umfasst;
   (iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle;
   (iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂;
   (v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄;
   (vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle;
   wobei das Verfahren weiterhin mindestens einen Schritt des mindestens teilweisen Vernetzens der vernetzbaren Klebeschicht umfasst, wobei der mindestens eine Schritt des Vernetzens nach den Schritten gemäß (ii) bis (vi) durchgeführt werden kann.
2. Verfahren gemäß Ausführungsform 1, wobei der Träger einen isolierenden Träger, bevorzugt einen elektrisch isolierenden Träger, weiter bevorzugt einen elektrisch isolierenden Träger mit einem spezifischen Durchgangswiderstand von >10¹⁵ Ωcm, bevorzugt >10¹⁶ Ωcm, weiter bevorzugt >10¹⁷ Ωcm, bestimmt gemäß DIN EN 62631-3-1 (VDE 0307-3-1): 2017-01, umfasst.
3. Verfahren gemäß Ausführungsform 1 oder 2, wobei der Träger ein oder mehrere Materialien, ausgewählt aus der Gruppe bestehend aus Polyimid, Polybenzimidazol, Polyamidimid, Polyetherimid, Polyacetal, Polyphenylensulfid, Polyetheretherketon, Polytetrafluorethylen, Polyamid 6, ultrahochmolekulargewichtiges Polyethylen, Polypropylen, Vinylchloridharz, Polystyrol, Polyethylentherephthalat, Acrylnitril-Butadien-Styrol, Polycarbonat, Polyvinylchlorid, Ethylenvinylacetat und Polyester, bevorzugt aus der Gruppe bestehend aus Polypropylen, Polyethylentherephthalat, Polycarbonat und Polyvinylchlorid, weiter bevorzugt aus der Gruppe bestehend aus Polypropylen und Polyethylentherephthalat, umfasst.
4. Verfahren gemäß einer der Ausführungsformen 1 bis 3, wobei der Träger eine Dicke im Bereich von 20 bis 100 µm, bevorzugt im Bereich 30 bis 90 µm, weiter bevorzugt im Bereich von 40 bis 75 µm aufweist.
5. Verfahren gemäß einer der Ausführungsformen 1 bis 4, wobei die vernetzbare Klebeschicht eine Dicke im Bereich von 10 bis 150 µm, bevorzugt im Bereich von 10 bis 100 µm, weiter bevorzugt im Bereich von 20 bis 60 µm aufweist.
6. Verfahren gemäß einer der Ausführungsformen 1 bis 5, wobei die vernetzbare Klebeschicht eine vernetzbare Haftklebemasse umfasst und wobei die vernetzbare Haftklebemasse eine Klebekraft auf Stahl von mindestens 1 N/cm im unvernetzten Zustand, bestimmt gemäß Prüfmethode 2 aufweist.
7. Verfahren gemäß der Ausführungsform 6, wobei die vernetzbare Haftklebemasse durch Strahlung einer Wellenlänge im Bereich von 10 bis 800 nm, bevorzugt durch Strahlung einer Wellenlänge im Bereich von 200 bis 500 nm, weiter bevorzugt durch Strahlung einer Wellenlänge im Bereich von 350 nm und 485 nm, weiter bevorzugt durch Strahlung einer LED Lichtquelle mit einem Emmissionsmaximum im Bereich von 350 nm bis 485 nm vernetzbar ist.
8. Verfahren gemäß der Ausführungsform 6 oder 7, wobei die vernetzbare Haftklebemasse mindestens ein Polymer, mindestens ein Epoxidharz und mindestens einen Photoinitiator umfasst.
9. Verfahren gemäß einer der Ausführungsformen 6 bis 8, wobei die vernetzbare Haftklebemasse
   (a) 25 bis 75 Gew.-%, bevorzugt 30 bis 70 Gew.-% mindestens eines Polymers;
   (b) 20 bis 70 Gew.-%, bevorzugt 30 bis 65 Gew.-% mindestens eines Epoxidharzes;
   (c) 0,01 bis 5 Gew.-%, bevorzugt 1 bis 4 Gew.-% mindestens eines kationischen Photoinitiators umfasst.
10. Verfahren gemäß der Ausführungsform 8 oder 9, wobei das mindestens eine Polymer ein oder mehrere Materialien, ausgewählt aus der Gruppe bestehend aus Polyacrylat, Polyurethan, Poly(ethylen)vinylacetat Copolymer, Poly(ethylen)vinylacetat Copolymer, Nitrilkautschuk und Polyacrylat Blockcopolymere, bevorzugt ausgewählt aus der Gruppe bestehend aus Polyacrylat, Poly(ethylen)vinylacetet Copolymer und Polyacrylat Blockcopolymere umfasst.
11. Verfahren gemäß einer der Ausführungsformen 8 bis 10, wobei das mindestens ein Epoxidharz mindestens ein Epoxidharz E₁ und mindestens ein Epoxidharz E₂ umfasst.
12. Verfahren gemäß der Ausführungsform 11, wobei das Epoxidharz E₁ ein bei 25 °C festes oder hochviskoses Epoxidharz E₁ und das Epoxidharz E₂ ein bei 25 °C flüssiges Epoxidharz E₂ umfasst.
13. Verfahren gemäß der Ausführungsform 11 oder 12, wobei das mindestens ein Epoxidharz E₁ ein Tg von ≥ 25 °C und das mindestens ein Epoxidharz E₂ ein Tg von < 25 °C, bestimmt gemäß Prüfmethode 3, aufweist.
14. Verfahren gemäß einer der Ausführungsformen 11 bis 13, wobei das mindestens ein Epoxidharz E₁ bei 25 °C eine dynamische Viskosität von 100 Pa s oder mehr, bevorzugt von 150 Pa s oder mehr, bestimmt gemäß Prüfmethode 4 aufweist.
15. Verfahren gemäß einer der Ausführungsformen 11 bis 14, wobei das mindestens ein Epoxidharz E₂ bei 25 °C eine dynamische Viskosität von 30 Pa s oder weniger, bevorzugt 20 Pa s oder weniger, weiter bevorzugt 10 Pa s oder weniger, bestimmt gemäß Prüfmethode 4 aufweist.
16. Verfahren gemäß einer der Ausführungsformen 11 bis 15, wobei das mindestens ein Epoxidharz E₁ eine Erweichungstemperatur von 45 °C oder mehr, bestimmt gemäß Prüfmethode 5, aufweist.
17. Verfahren gemäß einer der Ausführungsformen 11 bis 16, wobei E₁ :E₂ im Bereich von 10:1 bis 1:10, bevorzugt im Bereich von 4:1 bis 1:4 liegt.
18. Verfahren gemäß einer der Ausführungsformen 8 bis 17, wobei der mindestens ein Photoinitiator ein oder mehrere Materialien, ausgewählt aus der Gruppe bestehend aus Sulfonium, lodonium und Metallocen basierende Systemen, umfasst.
19. Verfahren gemäß einer der Ausführungsformen 6 bis 18, wobei die vernetzbare Haftklebemasse zusätzlich
   (d) 3 bis 30 Gew.-%, bevorzugt 5 bis 20 Gew.-%, weiter bevorzugt 7 bis 15 Gew.-%, bezogen auf die Summe der Gew.-% des mindestens eines Polymers und des mindestens eines Epoxidharzes, mindestens ein elastomermodifiziertes Epoxid E₃ umfasst.
20. Verfahren gemäß der Ausführungsform 19, wobei das mindestens eine elastomermodifizierte Epoxid E₃ ein oder mehrere Materialien, ausgewählt aus der Gruppe bestehend aus carboxy-terminiertes Nitrilkautschuk, carboxy-terminiertes Butadienkautschuk, epoxy-terminiertes Butadienkautschuk, epoxy-terminiertes Nitrilkautschuk, epoxyfunktionalisierten Polyurethan, Polyester und Polyether umfasst.
21. Verfahren gemäß einer der Ausführungsformen 1 bis 20, wobei die mindestens zwei gegenüberliegenden Seitenwände S₁ und S₂ mindestens zwei Flächen F₁ und F₂ umfassen, wobei die Seitenwand S₁ die Fläche F₁ und die Seitenwand S₂ die Fläche F₂ umfasst.
22. Verfahren gemäß der Ausführungsform 21, wobei die Fläche F₁ und die Fläche F₂ die gleiche Größe aufweisen.
23. Verfahren gemäß einer der Ausführungsformen 1 bis 22, wobei die mindestens zwei gegenüberliegenden Seitenwände S₃ und S₄ mindestens zwei Flächen F₃ und F₄ umfassen, wobei die Seitenwand S₃ die Fläche F₃ und die Seitenwand S₄ die Fläche F₄ umfasst.
24. Verfahren gemäß der Ausführungsform 23, wobei die Fläche F₃ und die Fläche F₄ die gleiche Größe aufweisen.
25. Verfahren gemäß einer der Ausführungsformen 21 bis 24, wobei die Flächen F₁ und F₂ größer als die Flächen F₃ und F₄ sind.
25. Verfahren gemäß einer der Ausführungsformen 1 bis 24, wobei die Batteriezelle rechteckig ist.
26. Verfahren gemäß einer der Ausführungsformen 1 bis 25, wobei die Oberseite O Batteriekontakte oder die Seitenwand S₃ und die Seitenwand S₄ jeweils einen Batteriekontakt umfasst.
27. Verfahren gemäß einer der Ausführungsformen 1 bis 26, wobei sich die Unterseite U gegenüber der Oberseite O befindet.
29. Verfahren gemäß einer der Ausführungsformen 1 bis 27, wobei das mindestens teilweise Vernetzen der vernetzbaren Klebeschicht nach dem Schritt gemäß (ii) durchgeführt wird.
31. Verfahren gemäß einer der Ausführungsformen 1 bis 27, wobei das mindestens teilweise Vernetzen der vernetzbaren Klebeschicht nach dem Schritt gemäß (vi) durchgeführt wird.
32. Verfahren gemäß einer der Ausführungsformen 1 bis 31, wobei gemäß (ii) die Klebefolie in Form einer zu einer Rolle gewickelten Klebefolienbahn bereitgestellt wird.
33. Verfahren gemäß einer der Ausführungsformen 1 bis 32, bevorzugt Ausführungsform 32, wobei (iii) umfasst:
   (iii.1) Abwickeln der Klebefolie von der Rolle und gleichzeitiges Vernetzen der vernetzbaren Klebeschicht durch Strahlung einer Wellenlänge im Bereich von 10 bis 800 nm, bevorzugt durch Strahlung einer Wellenlänge im Bereich von 200 bis 500 nm, weiter bevorzugt durch Strahlung einer Wellenlänge im Bereich von 350 nm und 485 nm, weiter bevorzugt durch Strahlung einer LED Lichtquelle mit einem Emmissionsmaximum im Bereich von 350 nm bis 485 nm vernetzbar ist.
34. Verfahren gemäß einer der Ausführungsformen 1 bis 33, wobei die Klebefolie eine Breite b und eine Länge l aufweist.
35. Verfahren gemäß der Ausführungsform 34, wobei im Schritt (iii) die Breite b der Klebefolie um Fläche Δb₁ über die Unterseite U der Batteriezelle hinausragt.
36. Verfahren gemäß der Ausführungsform 34 oder 35, wobei im Schritt (iv) die Länge l der Klebefolie um Fläche Δl₁ über die Oberseite O der Batteriezelle hinausragt.
37. Verfahren gemäß einer der Ausführungsformen 34 bis 36, wobei im Schritt (iv) die Breite b der Klebefolie um Fläche Δb₂ über den mindestens zwei gegenüberliegenden Seitenwänden S₁ und S₂ der Batteriezelle hinausragt, wobei Δb₂ < Δb₁.
38. Verfahren gemäß einer der Ausführungsformen 34 bis 37, wobei im Schritt (iv) die Breite b der Klebefolie um Fläche Δb₃ über die Unterseite U der Batteriezelle hinausragt, wobei Δb₃ < Δb₂ < Δb₁.
39. Verfahren gemäß einer der Ausführungsformen 1 bis 38, wobei (iv) umfasst:
   (iv.1) Bereitstellen einer Verklebevorrichtung umfassend mindestens eine Andrückrolle;
   (iv.2) Führen der mindestens einer Andrückrolle über die Seitenwand S₁ und/oder die Seitenwand S₂ umfassend Verkleben der Klebeschicht der Klebefolie und der Seitenwand S₁ und/oder der Seitenwand S₂, bevorzugt durch Andrücken der Klebeschicht der Klebefolie mittels der Andrückrolle.
40. Verfahren gemäß einer der Ausführungsformen 34 bis 39, wobei (v) umfasst:
   (v.1) Aufbringen von Δb₃ auf die mindestens zwei Seitenwände S₃ und S₄, umfassend Verkleben der Klebeschicht der Klebefolie und der mindestens zwei Seitenwänden S₃ und S₄;
   (v.2) Aufbringen von Δb₂ auf die mindestens zwei Seitenwände S₃ und S₄, umfassend Verkleben der Klebeschicht der Klebefolie und der mindestens zwei Seitenwänden S₃ und S₄, unter Bildung von Fläche ΔI₂, wobei Δl₂ < Δl₁.
41. Verfahren gemäß einer der Ausführungsformen 34 bis 40, wobei (vi) umfasst:
   (vi.1) Aufbringen von Δl₂ auf die Oberseite O der Batteriezelle, umfassend Verkleben der Klebeschicht der Klebefolie und der mindestens einer Oberseite O, unter Bildung von Fläche Δl₃, wobei Δl₃ < Δl₂;
   (vi.2) Aufbringen von Δl₃ auf die Oberseite O der Batteriezelle, umfassend Verkleben der Klebeschicht der Klebefolie und der mindestens einer Oberseite O.
42. Verfahren zur Ummantelung einer Batteriezelle, die Schritte umfassend
   (i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst;
   (ii) Bereitstellen einer Klebefolie einer Breite b und einer Länge l, wobei die Klebefolie mindestens eine vernetzbare Klebeschicht und mindestens einen Träger umfasst;
   (iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle, wobei die Breite b der Klebefolie um Fläche Δb, über die Unterseite U der Batteriezelle hinausragt, wobei Δb₁ < b;
   (iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂, wobei die Breite b der Klebefolie um Fläche Δb₂ über den mindestens zwei gegenüberliegenden Seitenwänden S₁ und S₂ der Batteriezelle hinausragt, wobei Δb₂ < Δb₁;
   (v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄, wobei die Breite b der Klebefolie um Fläche Δb₃ über den mindestens zwei gegenüberliegenden Seitenwänden S₃ und S₄ der Batteriezelle hinausragt, wobei Δb₃ < Δb₁;
      (v.1) Aufbringen von Δb₃ auf die mindestens zwei Seitenwände S₃ und S₄, umfassend Verkleben der Klebeschicht der Klebefolie und der mindestens zwei Seitenwänden S₃ und S₄;
      (v.2) Aufbringen von Δb₂ auf die mindestens zwei Seitenwände S₃ und S₄, umfassend Verkleben der Klebeschicht der Klebefolie und der mindestens zwei Seitenwänden S₃ und S₄, unter Bildung von Fläche ΔI₂, wobei Δl₂ < Δl₁;
   (vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle;
      (vi.1) Aufbringen von Δl₂ auf die Oberseite O der Batteriezelle, umfassend Verkleben der Klebeschicht der Klebefolie und der mindestens einer Oberseite O, unter Bildung von Fläche ΔI₃, wobei Δl₃ < ΔI₂;
      (vi.2) Aufbringen von Δl₃ auf die Oberseite O der Batteriezelle, umfassend Verkleben der Klebeschicht der Klebefolie und der mindestens einer Oberseite O;
   wobei das Verfahren weiterhin mindestens einen Schritt des mindestens teilweisen Vernetzens der vernetzbaren Klebeschicht umfasst, wobei der mindestens eine Schritt des Vernetzens nach dem Schritt gemäß (ii) oder nach dem Schritt gemäß (vi) durchgeführt wird.
43. Ummantelte Batteriezelle, erhältlich oder erhalten durch ein Verfahren gemäß einer der Ausführungsformen 1 bis 42.

### Beschreibung der Figuren

Weitere Einzelheiten und Merkmale der vorliegenden Erfindung ergeben sich aus der Beschreibung von Figuren und Ausführungsbeispielen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Die Figuren werden gemeinsam beschrieben.

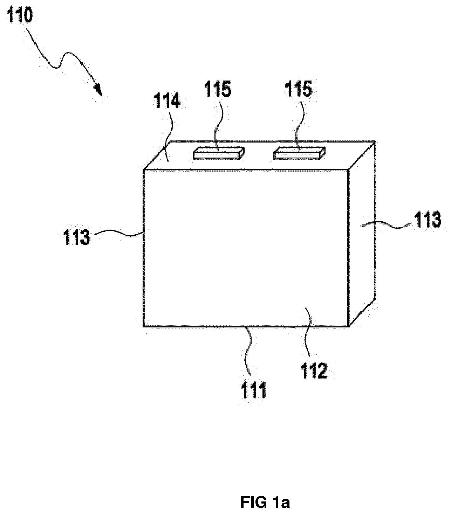

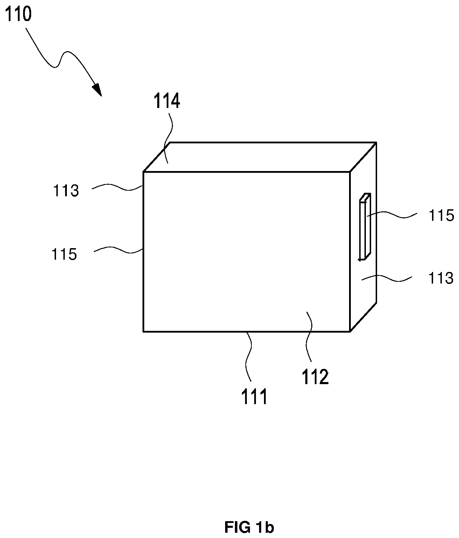

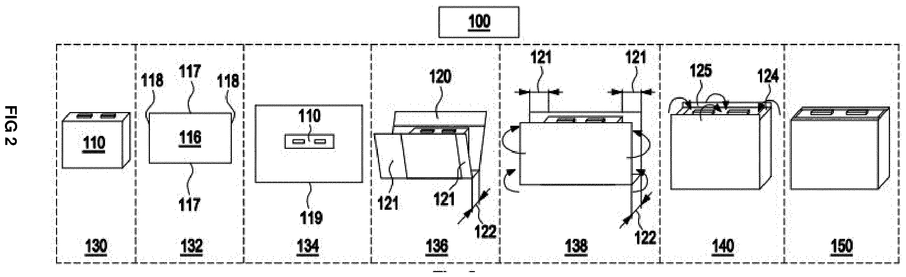

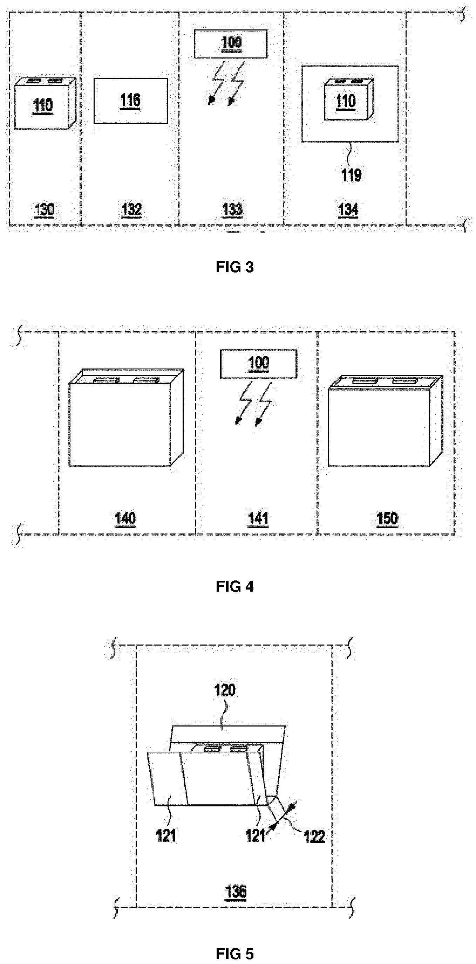

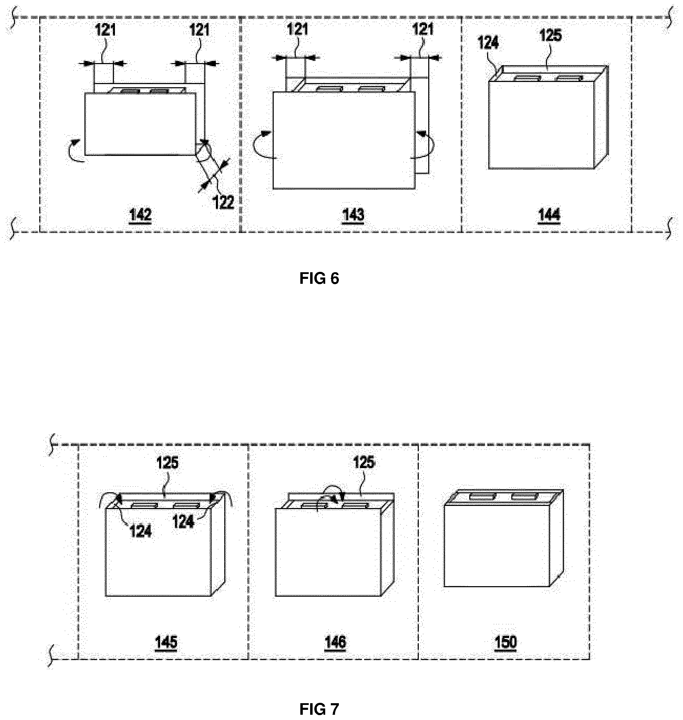

Figur 1a zeigt eine Batteriezelle 110 umfassend eine Unterseite U 111, zwei gegenüberliegende Seitenwände S₁ und S₂ 112, zwei gegenüberliegende Seitenwände S₃ und S₄ 113, die Oberseite 0 114 und zwei Batteriekontakte 115 auf der Oberseite 114. Figur 1b zeigt eine andere Variante einer Batteriezelle 110 umfassend eine Unterseite U 111, zwei gegenüberliegende Seitenwände S₁ und S₂ 112, zwei gegenüberliegende Seitenwände S₃ und S₄ 113, auf denen jeweils ein Batteriekontakt 115 vorhanden ist, und eine Oberseite O 114. Die Figuren 2-7 zeigen verschiedene Ausführungsbeispiele eines Verfahrens zur Ummantelung einer Batteriezelle 110 gemäß Figur 1a. Insbesondere zeigt die Figur 2 ein Ausführungsbeispiel eines Verfahrens zur Ummantelung einer Batteriezelle 110. Schritt (i) 130 zeigt das Bereitstellen einer Batteriezelle 110, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst. Schritt (ii) 132 zeigt das Bereitstellen einer Klebefolie 116 mit einer Breite b 118 und einer Länge l 117. Schritt (iii) 134 zeigt das in Kontaktbringen der Klebefolie 116 und der mindestens einer Unterseite U der Batteriezelle 116, umfassend Verkleben der mindestens einer vernetzbaren Klebeschicht der Klebefolie 116 und der mindestens einer Unterseite U 111 der Batteriezelle, wobei die Breite b 118 der Klebefolie 116 um Fläche Δb₁ 119 über die Unterseite U 111 der Batteriezelle 110 hinausragt. Schritt (iv) 136 zeigt das in Kontaktbringen der Klebefolie 116 und der mindestens zwei Seitenwände S₁ und S₂ 112, umfassend Verkleben der mindestens einer vernetzbaren Klebeschicht der Klebefolie 116 und der mindestens zwei Seitenwänden S₁ und S₂ 112, wobei die Breite b 118 der Klebefolie um Fläche Δb₂ 121 über den mindestens zwei gegenüberliegenden Seitenwänden S₁ und S₂ 112 der Batteriezelle 110 hinausragt und wobei die Länge l 117 um Fläche Δl₁ 120 über die Oberseite O 114 der Batteriezelle 110 hinausragt. Schritte (v) 138 und (vi) 140 zeigen das in Kontaktbringen der Klebefolie 116 und der mindestens zwei Seitenwände S₃ und S₄ 113, umfassend Verkleben der mindestens einer vernetzbaren Klebeschicht der Klebefolie 116 und den mindestens zwei Seitenwänden S₃ und S₄ 113, wobei die Breite b 118 der Klebefolie 116 um Fläche Δb₃ 122 über die Unterseite der Batteriezelle 110 hinausragt, wobei Δb₃ 122 auf die mindestens zwei Seitenwände S₃ und S₄ 113 verklebt wird und wobei Δb₂ 121 auf die mindestens zwei Seitenwände S₃ und S₄ 113, umfassend Verkleben der Klebeschicht der Klebefolie 116 und der mindestens zwei Seitenwänden S₃ und S₄ 113, unter Bildung von Fläche Δl₂ 124 verklebt wird. Schritt (vi) 140 zeigt das in Kontaktbringen der Klebefolie 116 und der mindestens einer Oberseite O 114, umfassend Verkleben der mindestens einer vernetzbaren Klebschicht der Klebefolie 116 und der mindestens einer Oberseite 0 114 der Batteriezelle 110, wobei Δl₂ 124 auf die Oberseite 0 114 der Batteriezelle 110 unter Bildung von Fläche Δl₃ 125 geklebt wird und wobei Δl₃ 125 auf die Oberseite 0 114 der Batteriezelle 110, umfassend Verkleben der Klebeschicht der Klebefolie 116 und der mindestens einer Oberseite 0 114 geklebt wird. Außerdem zeigt die Figur 2 ein Ausführungsbeispiel einer ummantelten Batteriezelle 150 und ein Ausführungsbeispiel eines Verfahrens zur Ummantelung einer Batteriezelle 110, das weiterhin mindestens einen Schritt des mindestens teilweisen Vernetzens der vernetzbaren Klebeschicht mit einer Vernetzungseinheit 100 umfasst. Die Figur 3 zeigt ein Ausführungsbeispiel eines Verfahrens zur Ummantelung einer Batteriezelle 110, wobei das mindestens teilweise Vernetzen der vernetzbaren Klebeschicht nach dem Schritt gemäß (ii) mit einer Vernetzungseinheit 100 im Schritt 133 durchgeführt wird. Die Figur 4 zeigt ein Ausführungsbeispiel eines Verfahrens zur Ummantelung einer Batteriezelle 110, wobei das mindestens teilweise Vernetzen der vernetzbaren Klebeschicht nach dem Schritt gemäß (vi) mit einer Vernetzungseinheit 100 im Schritt 141 durchgeführt wird. Die Figur 5 zeigt einen vergrößerten Ausschnitt aus dem Schritt (iv) 136. Die Figur 6 zeigt ein bevorzugtes Ausführungsbeispiel der Schritte (v) 138 und (vi) 140, wobei im Schritt 142 zuerst Δb₃ 122 auf die mindestens zwei Seitenwände S₃ und S₄ 113 geklebt wird. Danach wird im Schritt 143 Δb₂ 121 auf die mindestens zwei Seitenwände S₃ und S₄ 113, unter Bildung von Fläche Δl₂ 124, geklebt. Die Figur 7 zeigt ein bevorzugtes Ausführungsbeispiel des Schrittes 140 wobei das in Kontaktbringen der Klebefolie 116 und der mindestens einer Oberseite O 114, umfassend Verkleben der mindestens einer vernetzbaren Klebschicht der Klebefolie 116 und der mindestens einer Oberseite 0 114 der Batteriezelle 110. Dabei wird im Schritt 145 zuerst Δl₂ 124 auf die Oberseite 0 114 der Batteriezelle 110 unter Bildung von Fläche Δl₃ 125 geklebt. Danach wird Δl₃ 125 auf die Oberseite 0 114 der Batteriezelle 110 geklebt.

Das Verfahren zur Ummantelung einer Batteriezelle 110, wie sie in Figur 1b gezeigt ist, verläuft analog. Das Verfahren beginnt mit dem Bereitstellen einer Batteriezelle 110, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst. Auf den zwei gegenüberliegenden Seitenwände S₃ und S₄ ist jeweils ein Batteriekontakt vorhanden.

Die Klebefolie, umfassend mindestens eine vernetzbare Klebeschicht und mindestens einen Träger, ummantelt die zwei gegenüberliegenden Seitenwände S₁ und S₂, die Unterseite U und die Oberseite O in einem Stück, wobei die Enden der Klebefolie überlappend aufeinander geklebt werden. Die Klebefolie weist eine größere Breite auf als die gegenüberliegenden Seitenwände S₁ und S₂, die Unterseite U und die Oberseite O, so dass die Klebefolie an den zwei gegenüberliegenden Seitenwänden S₃ und S₄, die jeweils einen Batteriekontakt haben, einen Überstand aufweist. Die einzelnen Abschnitte, die den Überstand an den Seitenwänden S₁ und S₂, an der Unterseite U und an der Oberseite O bilden, werden in beliebiger Reihenfolge umgeklappt auf der jeweiligen Seitenwand S₃ und S₄ aufgeklebt.

Das in den Figuren 2-7 gezeigte und in der zu den Figuren zugehörigen Offenbarung beschriebene Verfahren zur Ummantelung einer Batteriezelle 110, bei der auf der die Oberseite O zwei Batteriekontakte vorhanden sind, ist analog auf eine Batteriezelle 110 übertragbar, bei der die Seitenwände S₃ und S₄ jeweils ein Batteriekontakt aufweisen. In dieser Variante des erfindungsgemäßen Verfahrens ist die Reihenfolge der Teilschritte (v) und (vi) getauscht.

### Bezugszeichenliste

- 100: Vernetzungseinheit
- 110: Batteriezelle
- 111: Unterseite
- 112: Seitenwände S₁ und S₂
- 113: Seitenwände S₃ und S₄
- 114: Oberseite O
- 115: Batteriekontakte
- 116: Klebefolie
- 117: Länge l
- 118: Breite b
- 119: Fläche Δb₁
- 120: Fläche Δl₁
- 121: Fläche Δb₂
- 122: Fläche Δb₃
- 124: Fläche Δl₂
- 125: Fläche Δl₃
- 130: Schritt (i)
- 132: Schritt (ii)
- 133: Vernetzen der vernetzbaren Klebeschicht nach dem Schritt gemäß (ii)
- 134: Schritt (iii)
- 136: Schritt (iv)
- 138: Schritt (v)
- 140: Schritt (vi)
- 141: Vernetzen der vernetzbaren Klebeschicht nach dem Schritt gemäß (vi)
- 142: Schritt (v.1)
- 143: Schritt (v.2)
- 144: Teilweise ummantelte Batteriezelle
- 145: Schritt (vi.1)
- 146: Schritt (vi.2)
- 150: Ummantelte Batteriezelle

### Beschreibung der Ausführungsbeispiele

### Prüfmethoden

### Prüfmethode 1: spezifischer Durchgangswiderstand

Der spezifische Durchgangswiderstand wurde nach DIN EN 62631 -3-1 (VDE 0307-3-1): 2017-01 bestimmt.

### Prüfmethode 2: Klebekraft

Die Klebkräfte wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Als Substrat wurden Stahlplatten entsprechend der Norm verwendet. Die Verklebung des Messstreifens wurde dabei mittels einer Anrollmaschine mit 4 kg bei einer Temperatur von 23 °C vorgenommen. Die Klebefolien wurden sofort nach der Applikation abgezogen oder nach einer Lagerzeit von 24 h. Der Messwert (in N/cm) ergab sich als Mittelwert aus drei Einzelmessungen.

### Prüfmethode 3: Tg

Die Glasübergangstemperatur von Polymeren wird mittels dynamischer Scanning Kalorimetrie (DSC) bestimmt. Dazu werden ca. 5 mg der unbehandelten Polymerproben in ein Aluminiumtiegelchen (Volumen 25 µL) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf - 150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet. An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Prüfmethode 4: Dynamische Viskosität

Im Rahmen der vorliegenden Erfindung wird die dynamische Viskosität gemäß der DIN 53019-1 : aus 2008-09; bei 25 °C, mit einer Schergeschwindigkeit von 1 s⁻¹ bestimmt.

### Prüfmethode 5: Erweichungstemperatur

Im Rahmen der vorliegenden Erfindung wird die Erweichungstemperatur nach der einschlägigen Methodik durchgeführt, die als Ring and Ball bekannt ist und nach ASTM E28 (1.7.2018) standardisiert ist.

Zur Bestimmung der Erweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt.

Der resultierende Probekörper wird samt Zylinder in die Probehalterung des HRB 754 eingelegt. Zur Befüllung des Temperierbads wird Glycerin verwendet, sofern die Erweichungstemperatur zwischen 50 °C und 150 °C liegt. Bei niedrigeren Erweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur das Temperierbads registriert. Es findet eine Doppelbestimmung statt. Die Erweichungstemperatur ist der Mittelwert aus den beiden Einzelmessungen.

Die in den Beispielen und Vergleichsbeispielen verwendeten Rohmaterialien sind in der Tabelle 1 zusammengefasst.

**Tabelle 1: Verwendeten Rohmaterialien**

| | |
|---|---|
| Polyacrylat | BA-GMA Copolymer mit einem Reaktivanteil von 10 wt% GMA |
| Levamelt 700 | Ethylen-Vinylacetat Copolymer der Firma Arlanxeo mit 70% Vinylacetatanteil |
| Breon N45H80 | Heißpolymerisierter Nitrilkautschuk mit 42% Acrylnitrilanteil |
| Araldite GY-250 | Flüssiges Bisphenol-A Epoxidharz der Firma Huntsman mit einem Epoxidäquivalent von 183 - 189 g/eq |
| Araldite GT-6071 | Festes Bisphenol-A-Epoxidharz der Firma Huntsman mit einem Epoxidäquivalent von 450 - 465 g/eq |
| Voranol 2070 | Polyetherpolyol mit einem Molekulargewicht von M = 700g/mol |
| KH-560 | 3-Glycidoxypropyltrimethoxysilan |
| Dyhard 100S | Dicyandiamid der Firma Alzchem mit einer Partikelgröße von kleiner 10 µm |
| Curezol 2MZ-A | 2,4-diamino-6-[2'-methylimidazolyl-(1')]-ethyl-s-triazine von Evonik |
| Photoinitiator | Triarylsulfonium hexafluoroantimonat Salze |
| PET-Träger | 50 µm transparente PET-Folie der Firma Fatra |

### Beispiele K1-K3 und Vergleichsbeispiele V1-V3

Die Klebeschicht der Beispiele K1-K3 und der Vergleichsbeispiele V2-V3 wurden gemäß den Gewichtsverhältnissen in Gew.-% in der Tabelle 2 hergestellt. Das Vergleichsbeispiel V1 ist ein kommerziell erhältliches, elektrisch isolierendes Klebeband, tesa^{®}58353, bestehend aus 50 µm Polyethylentherephthalat Träger mit 35 µm Acrylat-Klebeschicht.

**Tabelle 2: Beispiele K1-K3 und Vergleichsbeispiele V1-V3**

| | **K1** | **K2** | **K3** | **V1** | **V2** | **V3** |
|---|---|---|---|---|---|---|
| Polyacrylat | 50 | | | | | |
| Breon N45H80 | | | 40 | | | |
| Levamelt 700 | | 40 | | | 40 | 20 |
| Araldite GY250 | 40 | 30 | 30 | | 60 | 40 |
| Araldite GT6071 | 10 | 20 | 30 | | | 40 |
| Voranol 2070 | 1 | 10 | | | | |
| KH-560 | 1 | | | | | |
| Photoinitiator | 1 | 1 | | | 1 | 1 |
| Dyhard 100S | | | 2,96 | | | |
| Curezol 2MZ-A | | | 1,2 | | | |
| Verklebungsfestigkeit (Stahl-Stahl) | > 4 MPa | > 4 MPa | > 4 MPa | < 1 MPa | > 4 MPa | > 4 MPa |
| Klebekraft | > 1 N/cm adhäsives Versagen | > 1 N/cm adhäsives Versagen | > 1 N/cm adhäsives Versagen | > 1 N/cm adhäsives Versagen | kohäsives Versagen, kein Haftklebstoff | kohäsives Versagen, kein Haftklebstoff |

Die in Butanon gelösten Klebemassen wurden in einer Schichtdicke von 35 µm auf eine 50 µm Polyethylentherephthalat Träger ausgestrichen, bei 105 °C in einem Trockenofen vom Lösungsmittel befreit und mit einem silikonisierten PET-Liner eingedeckt.

### Verklebungsfestigkeit

Die Verklebungsfestigkeit der erhaltenden Klebeschicht wurde in 100 µm Schichtdicke vermessen und in MPa angegeben.

Aushärtebedingungen: Die Beispiele K1 und K2 und die Vergleichsbeispiele V2 und V3 wurden mit einer 365 nm UV-LED Bestrahlung mit 4 J/cm² bestrahlt und innerhalb von weniger als einer Minute nach der Aktivierung verklebt. Die Messung erfolgte nach einer Nachhärtungszeit von 7 Tagen bei 23 °C. Das Vergleichsbeispiel V1 ist ein nicht-reaktiver Haftklebstoff, sodass keine Aktivierung nötig ist. Das Beispiel K3 ist ein thermisch härtbarer reaktiver Haftklebstoff, der nach der Applikation für 25 Minuten bei 145 °C ausgehärtet wird.

Bestimmung der Verklebungsfestigkeit mittels Zugscherversuch:
Als Kenngröße für die Qualität der erzielten Verklebung wurde die Verklebungsfestigkeit eines nach dem erfindungsgemäßen Verfahren hergestellten Verbunds für die unterschiedlichen Klebebänder ermittelt. Hierzu wurde die Verklebungsfestigkeit in einem dynamischen Zugscherversuch in Anlehnung an DIN EN 1465: 2009-07 bei 23 °C und 50 % rF für eine Prüfgeschwindigkeit von 10 mm/min jeweils quantitativ bestimmt (Ergebnisse in N/mm²=MPa). Als Prüfstäbe kamen solche aus Stahl zum Einsatz, welche vor der Verklebung mit Aceton gereinigt wurden. Angegeben ist der Mittelwert aus drei Messungen.

### Verfahrensbeispiele

Für das blasenfreie Bekleben der Batteriezellwände mit der Klebefolie eignen sich z.B. Rollen, die das Klebeband von einer Seite beginnend an die Batteriezellenwand rollend andrücken.

### Verfahrensbeispiel M1

Es wurde ein rechteckiges Stück einer PET-Klebefolie mit einer vernetzbaren Klebeschicht zurechtgeschnitten und vom Liner befreit. Danach wurde die Klebefolie mit einer Dosis von 4 J/cm² mit einer Hoenle UV-LED 365 nm bestrahlt (UV-LED, 365nm, 4s mit 1000 mJ/cm² s). Als Klebeschicht wurde K2 verwendet. Die Ummantelung der Batteriezelle wurde in folgender Reihenfolge durchgeführt:
1) Verkleben der Klebeschicht der Klebefolie und der Unterseite U der Batteriezelle;
2) Verkleben der Klebeschicht der Klebefolie und der zwei großen Seitenwände S₁ und S₂;
3) Verkleben des Überstandes Δb₃ der Unterseite U an den kleinen Seitenwänden S₃ und S₄;
4) Verkleben des Seitenüberstandes Δb₂ an den kleinen Seitenwänden S₃ und S₄;
5) Verkleben des Überstandes Δl₂ der kleinen Seitenwände S₃ und S₄ an der Oberseite O der Batteriezelle;
6) Verkleben des Überstandes Δl₃ der großen Seitenwände S₁ und S₂ an der Oberseite O der Batteriezelle.

### Verfahrensbeispiel M2

Das Verfahrensbeispiel M2 wurde wie das Verfahrensbeispiel M1 durchgeführt, wobei die Bestrahlung mit dem Liner durchgeführt wurde. Es wurde mit einer Dosis von 4 J/cm² (UV-LED 365 nm, 4 s mit 1000 mJ/cm² s) bestrahlt und danach wurde der Liner entfernt und die Batteriezelle, wie im Verfahrensbeispiel M1 beschrieben, ummantelt.

### Verfahrensbeispiel M3

Das Verfahrensbeispiel M3 wurde wie das Verfahrensbeispiel M1 durchgeführt, mit dem Unterschied, dass die Klebefolie erst nach der vollständigen Ummantelung der Batteriezelle bestrahlt wurde. In diesem Fall mit einer Dosis von größer 5 J/cm² (UV-LED 365nm, 10s mit 1000mJ/cm² s auf jeder Seite), um die Bereiche, in denen die Klebefolie aufgrund von Faltprozessen und Überklebungen mehrlagig ist, zu erreichen.

### Verfahrensbeispiel M4

Es wurde ein rechteckiges Stück einer PET-Klebefolie mit einer vernetzbaren Klebeschicht zurechtgeschnitten und vom Liner befreit. Als Klebeschicht wurde K3 verwendet. Die Ummantelung der Batteriezelle wurde in folgender Reihenfolge durchgeführt:
1) Verkleben der Klebeschicht der Klebefolie und der Unterseite U der Batteriezelle;
2) Verkleben der Klebeschicht der Klebefolie und der zwei großen Seitenwände S₁ und S₂;
3) Verkleben des Überstandes Δb₃ der Unterseite U an den kleinen Seitenwänden S₃ und S₄;
4) Verkleben des Seitenüberstandes Δb₂ an den kleinen Seitenwänden S₃ und S₄;
5) Verkleben des Überstandes Δl₂ der kleinen Seitenwände S₃ und S₄ an der Oberseite O der Batteriezelle;
6) Verkleben des Überstandes Δl₃ der großen Seitenwände S₁ und S₂ an der Oberseite O der Batteriezelle.

Im Anschluss wurde die Klebefolie nach der Ummantelung der Batteriezelle thermischer Energie ausgesetzt (20 Minuten bei 140 °C).

### Verfahrensbeispiel M5

Das Verfahrensbeispiel M5 wurde wie das Verfahrensbeispiel M1 durchgeführt, wobei als Klebeschicht K1 verwendet wurde.

### Vergleichsverfahrensbeispiele

### Vergleichsverfahrensbeispiel VM1

Es wurde ein rechteckiges Stück einer PET-Klebefolie mit einer vernetzbaren Klebeschicht zurechtgeschnitten und vom Liner befreit. Danach wurde die Klebefolie mit einer Dosis von 4 J/cm² mit einer Hoenle UV-LED 365 nm bestrahlt. Als Klebeschicht wurde K2 verwendet. Die Ummantelung der Batteriezelle wurde in folgender Reihenfolge durchgeführt:
1) Verkleben der Klebeschicht der Klebefolie und der Unterseite U der Batteriezelle;
2) Verkleben der Klebeschicht der Klebefolie und der zwei großen Seitenwände S₁ und S₂;
3) Verkleben des Seitenüberstandes Δb₂ an den kleinen Seitenwänden S₃ und S₄;
4) Verkleben des Überstandes Δb₃ der Unterseite U an den kleinen Seitenwänden S₃ und S₄;
5) Verkleben des Überstandes Δl₂ der kleinen Seitenwände an der Oberseite O der Batteriezelle;
6) Verkleben des Überstandes Δl₃ der großen Seitenwände an der Oberseite O der Batteriezelle.

Im VM1 sind im Vergleich zu M1-M5 die Schritte 3) und 4) in umgekehrter Reihenfolge.

### Vergleichsverfahrensbeispiel VM2

Es wurde ein rechteckiges Stück einer PET-Klebefolie mit einer vernetzbaren Klebeschicht zurechtgeschnitten und vom Liner befreit. Danach wurde die Klebefolie mit einer Dosis von 4 J/cm² mit einer Hoenle UV-LED 365 nm bestrahlt. Als Klebeschicht wurde K2 verwendet. Die Ummantelung der Batteriezelle wurde in folgender Reihenfolge durchgeführt:
1) Verkleben der Klebeschicht der Klebefolie und der Unterseite U der Batteriezelle;
2) Verkleben der Klebeschicht der Klebefolie und der zwei großen Seitenwände S₁ und S₂;
3) Verkleben des Seitenüberstandes Δb₂ an den kleinen Seitenwänden S₃ und S₄;
4) Verkleben des Überstandes Δb₃ der Unterseite U an den kleinen Seitenwänden S₃ und S₄;
5) Verkleben des Überstandes Δl₃ der großen Seitenwände an der Oberseite O der Batteriezelle;
6) Verkleben des Überstandes Δl₂ der kleinen Seitenwände an der Oberseite O der Batteriezelle.

Im VM2 sind im Vergleich zu M1-M5 die Schritte 3) und 4) und die Schritte 5) und 6) in umgekehrter Reihenfolge.

Die Ergebnisse der Ummantelung der Batteriezelle gemäß Verfahrensbeispielen M1-M5 und Vergleichsverfahrensbeispielen VM1-VM2 sind in der Tabelle 3 zusammengefasst.

**Tabelle 3: Verfahrensbeispiele M1-M5 und Vergleichsverfahrensbeispiele VM1-VM2**

| | **M1** | **M2** | **M3** | **M4** | **M5** | **VM1** | **VM2** |
|---|---|---|---|---|---|---|---|
| **Klebeschicht** | K2 | K2 | K2 | K3 | K1 | K2 | K2 |

| **Unterwanderungstest 85°C / 85% r.F.** | | | | | | | |
|---|---|---|---|---|---|---|---|
| | + | + | + | + | + | - | - |

| | | | | | | | |
|---|---|---|---|---|---|---|---|
| Bestanden: + Nicht bestanden: - | | | | | | | |

### Unterwanderungstest

Zur Bewertung der Verklebungsqualität wurde eine mit Isolierklebeband eingewickelte Batteriezelle für 1000 h in einer Klimakammer bei 85 °C und 85 % relativer Feuchte (r. F.) eingelagert. Der Test wurde als bestanden gewertet, wenn es nach dieser Zeit an keiner Verklebung zum Aufstellen der Verklebungsränder kam. Nicht bestanden bedeutet, wenn sich das Isolierklebeband an mindestens einer Stelle (häufig im Bereich der Falzen) löste und somit von der Zelle abstand.

Mit der Hilfe von Verklebungsverfahren M1 wurden auch die Klebefolien mit den Klebeschichten K1 und V1 verklebt und bewertet. Mit K1 wurde eine ausreichende Verklebungsfestigkeit von mehr als 4MPa erzielt und der Unterwanderungstest bestanden. Bei dem Vergleichsbeispiel V1 handelt es sich um einen kommerziellen Haftklebstoff, tesa^{®} 58353, der keine ausreichende Verklebungsfestigkeit aufweist, um als Verklebungsbasis für weitere flüssige Klebstoffe zu dienen. Die Beispiele V2 und V3 zeichnen sich zwar durch hohe Verklebungsfestigkeiten nach Aushärtung aus, sind jedoch aufgrund fehlender Epoxidfestharze bzw. zu niedrigem Polymeranteil zu weich, so dass die Klebeschicht eine zu niedrige Kohäsion aufweist, was sich im unausgehärteten Zustand im Klebkrafttest durch kohäsives Versagen zeigt. Solche weichen Klebmassen sind für das beanspruchte Verfahren weniger geeignet, da Sie einerseits aufgrund ihrer niedrigen Kohäsion dazu neigen aus den gewickelten Klebebandrollen an der Seite auszutreten und somit die Rollen zu verkleben und andererseits kann es beim Verkleben um Kanten aufgrund der Rückstellkraft der Trägerfolie zum Aufstellen ("edge lifting") bzw. Ablösen der Folie kommen. Im Vergleichsverfahren VM1 hat sich die Falzverbindung an der kleinen Seitenwand S₃ und S₄, die in Schritt 4) verklebt wurde, gelöst. Im Vergleichsverfahren VM2 haben sich die Kanten der kleinen Seitenwände der Oberseite, die in Schritt 6) verklebt wurde, gelöst.

## Patentansprüche

1. Verfahren zur Ummantelung einer Batteriezelle, die Schritte umfassend
(i) Bereitstellen einer Batteriezelle, wobei die Batteriezelle mindestens zwei gegenüberliegende Seitenwände S₁ und S₂, mindestens zwei gegenüberliegende Seitenwände S₃ und S₄, mindestens eine Unterseite U und mindestens eine Oberseite O umfasst;
(ii) Bereitstellen einer Klebefolie, wobei die Klebefolie mindestens eine vernetzbare Klebeschicht und mindestens einen Träger umfasst;
(iii) In Kontaktbringen der Klebefolie gemäß (ii) und der mindestens einer Unterseite U der Batteriezelle gemäß (i), umfassend Verkleben der mindestens einer vernetzbaren Klebeschicht der Klebefolie und der mindestens einer Unterseite U der Batteriezelle;
(iv) In Kontaktbringen der Klebefolie und der mindestens zwei Seitenwände S₁ und S₂, umfassend Verkleben der mindestens einer vernetzbaren Klebeschicht der Klebefolie und der mindestens zwei Seitenwänden S₁ und S₂;
(v) In Kontaktbringen der Klebefolie und der mindestens zwei Seitenwände S₃ und S₄, umfassend Verkleben der mindestens einer vernetzbaren Klebeschicht der Klebefolie und den mindestens zwei Seitenwänden S₃ und S₄;
(vi) In Kontaktbringen der Klebefolie und der mindestens einer Oberseite O, umfassend Verkleben der mindestens einer vernetzbaren Klebschicht der Klebefolie und der mindestens einer Oberseite O der Batteriezelle;
wobei das Verfahren weiterhin mindestens einen Schritt des mindestens teilweisen Vernetzens der vernetzbaren Klebeschicht umfasst, wobei der mindestens eine Schritt des Vernetzens nach den Schritten gemäß (ii) bis (vi) durchgeführt werden kann.

2. Verfahren gemäß Anspruch 1, wobei der Träger einen isolierenden Träger, bevorzugt einen elektrisch isolierenden Träger, weiter bevorzugt einen elektrisch isolierenden Träger mit einem spezifischen Durchgangswiderstand von >10¹⁵ Ωcm, bevorzugt >10¹⁶ Ωcm, weiter bevorzugt >10¹⁷ Ωcm, bestimmt gemäß DIN EN 62631-3-1 (VDE 0307-3-1): 2017-01, umfasst.

3. Verfahren gemäß Anspruch 1 oder 2, wobei der Träger ein oder mehrere Materialien, ausgewählt aus der Gruppe bestehend aus Polyimid, Polybenzimidazol, Polyamidimid, Polyetherimid, Polyacetal, Polyphenylensulfid, Polyetheretherketon, Polytetrafluorethylen, Polyamid 6, ultrahochmolekulargewichtiges Polyethylen, Polypropylen, Vinylchloridharz, Polystyrol, Polyethylentherephthalat, Acrylnitril-Butadien-Styrol, Polycarbonat, Polyvinylchlorid, Ethylenvinylacetat und Polyester, bevorzugt aus der Gruppe bestehend aus Polypropylen, Polyethylentherephthalat, Polycarbonat und Polyvinylchlorid umfasst.

4. Verfahren gemäß einem der Ansprüche 1 bis 3, wobei die vernetzbare Klebeschicht eine Dicke im Bereich von 10 bis 150 µm, bevorzugt im Bereich von 10 bis 100 µm, weiter bevorzugt im Bereich von 20 bis 60 µm aufweist.

5. Verfahren gemäß einem der Ansprüche 1 bis 4, wobei die vernetzbare Klebeschicht eine vernetzbare Haftklebemasse umfasst und wobei die vernetzbare Haftklebemasse mindestens ein Polymer, mindestens ein Epoxidharz und mindestens einen Photoinitiator umfasst.

6. Verfahren gemäß Anspruch 5, wobei die vernetzbare Haftklebemasse
(a) 25 bis 75 Gew.-%, bevorzugt 30 bis 70 Gew.-% mindestens eines Polymers;
(b) 20 bis 70 Gew.-%, bevorzugt 30 bis 65 Gew.-% mindestens eines Epoxidharzes;
(c) 0,01 bis 5 Gew.-%, bevorzugt 1 bis 4 Gew.-% mindestens eines kationischen Photoinitiators umfasst.

7. Verfahren gemäß Anspruch 5 oder 6, wobei der mindestens ein Epoxidharz mindestens ein Epoxidharz E₁ und mindestens ein Epoxidharz E₂ umfasst, und wobei das mindestens ein Epoxidharz E₁ ein Tg von ≥ 25 °C und das mindestens ein Epoxidharz E₂ ein Tg von < 25 °C, bestimmt gemäß Prüfmethode 3, aufweist.

8. Verfahren gemäß einem der Ansprüche 5 bis 7, wobei die vernetzbare Haftklebemasse zusätzlich
(d) 3 bis 30 Gew.-%, bevorzugt 5 bis 20 Gew.-%, weiter bevorzugt 7 bis 15 Gew.-%, bezogen auf die Summe der Gew.-% des mindestens eines Polymers und des mindestens eines Epoxidharzes, mindestens ein elastomermodifiziertes Epoxid E₃ umfasst und wobei das mindestens eine elastomermodifizierte Epoxid E₃ ein oder mehrere Materialien, ausgewählt aus der Gruppe bestehend aus carboxy-terminiertes Nitrilkautschuk, carboxy-terminiertes Butadienkautschuk, epoxy-terminiertes Butadienkautschuk, epoxy-terminiertes Nitrilkautschuk, epoxyfunktionalisierten Polyurethan, Polyester und Polyether umfasst.

9. Verfahren gemäß einem der Ansprüche 1 bis 8, wobei das mindestens teilweise Vernetzen der vernetzbaren Klebeschicht nach dem Schritt gemäß (ii) durchgeführt wird oder wobei das mindestens teilweise Vernetzen der vernetzbaren Klebeschicht nach dem Schritt gemäß (vi) durchgeführt wird.

10. Verfahren gemäß einem der Ansprüche 1 bis 9, wobei die Klebefolie eine Breite b und eine Länge 1 aufweist, wobei im Schritt (iii) die Breite b der Klebefolie um Fläche Δb₁ über die Unterseite U der Batteriezelle hinausragt, wobei im Schritt (iv) die Breite b der Klebefolie um Fläche Δb₂ über den mindestens zwei gegenüberliegenden Seitenwänden S₁ und S₂ der Batteriezelle und um Fläche Δb₃ über die Unterseite U der Batteriezelle hinausragt, wobei Δb₃ < Δb₂ < Δb₁ und Δb₂ < Δb₁ ist und wobei (v) umfasst:
(v.1) Aufbringen von Δb₃ auf die mindestens zwei Seitenwände S₃ und S₄, umfassend Verkleben der Klebeschicht der Klebefolie und der mindestens zwei Seitenwänden S₃ und S₄;
(v.2) Aufbringen von Δb₂ auf die mindestens zwei Seitenwände S₃ und S₄, umfassend Verkleben der Klebeschicht der Klebefolie und der mindestens zwei Seitenwänden S₃ und S₄, unter Bildung von Fläche Δl₂.

11. Verfahren gemäß Anspruch 10, wobei (vi) umfasst:
(vi.1) Aufbringen von Δl₂ auf die Oberseite O der Batteriezelle, umfassend Verkleben der Klebeschicht der Klebefolie und der mindestens einer Oberseite O, unter Bildung von Fläche ΔI₃, wobei Δl₃ < ΔI₂;
(vi.2) Aufbringen von Δl₃ auf die Oberseite O der Batteriezelle, umfassend Verkleben der Klebeschicht der Klebefolie und der mindestens einer Oberseite O.

12. Ummantelte Batteriezelle, erhältlich oder erhalten durch ein Verfahren gemäß einem der Ansprüche 1 bis 11.
